## Europäisches Patentamt

## European Patent Office

## Office européen des brevets

(11) Publication number: **0 055 993**

**A1**

(12) **EUROPEAN PATENT APPLICATION**

(21) Application number: **82200004.8**

(22) Date of filing: **04.01.82**

(51) Int. Cl.³: **B 22 D 17/24**
**B 29 F 1/00**

(30) Priority: **05.01.81 NL 8100011**

(43) Date of publication of application:
**14.07.82 Bulletin 82/28**

(84) Designated Contracting States:
**AT BE CH DE FR GB IT LI LU NL SE**

(71) Applicant: **WAVIN B.V.**
**251 Händellaan**
**NL-8031 EM Zwolle(NL)**

(72) Inventor: **Schudde, Tjaard Pieter Willem**
**78 Het Ambt**
**NL-8061 AN Hasselt(NL)**

(74) Representative: **van der Veken, Johannes**
**Adriaan et al,**
**EXTERPATENT 3 & 4 Willem Witsenplein**
**NL-2596 BK The Hague(NL)**

(54) A split core destined for defining a curved internal space of a moulded product and a moulded product provided with a curved internal space.

(57) The invention concerns a split core (13a, 13b) comprising shaping components (11a, 12a, 11b, 12b) which are displaceable with respect to one another and destined to be used in connection with an injection mould (16) destined to form a moulded product (14) having one or more curved internal spaces, more particularly a pipe bend.

At least one of the shaping components (11a, 12a; 11b, 12b) is constructed slideably along the other one and displaceable according to a path of travel, part of which has been adapted to the curved internal space of the product to be moulded. The shaping component following the path of travel of the other shaping component during passage of its path of travel, cooperates with a guide (19), a part (21) of which has been curved according to a path running parallel to successive points of a radius of curvature where the greatest cross-sections of the shaping component are perpendicular to a plane in which runs the radius of curvature.

./...

FIG. 4.

-1-

<u>A split core destined for defining a curved internal space</u>
<u>of a moulded product and a moulded product provided with a</u>
<u>curved internal space.</u>

The invention relates to a split core comprising shaping components which are displaceable with respect to one another,                  to be used in connection with an injection mould destined to form a moulded product, having one or more curved internal spaces, more particularly a pipe bend, at least one of the shaping components being constructed slideably along the other one and displaceable according to a path of travel adapted to the curved internal space of the product to be moulded.

The invention also relates to a moulded product comprising a curved internal space, more particularly a pipe bend consisting of injection-moulded material, the internal space of which having been manufactured by means of one or more split cores.

Cores to be used in moulded products comprising a curved internal space, such as, for instance, bends of pipe conduits, are in actual practice often difficultly to be retracted from said internal spaces in the moulded product. The cause of this problem is a.o. the fact that the curved inner space is undercut so that the entrance of the internal space of e.g.

pipe bends comprises a straight cylindrical portion acting as a socket or spigot end, designed for connection to another pipe part. Moreover, the cross-section of curved internal spaces of pipe bends is preferably circular, so causing their greatest cross-section to constantly extend according to the curved centre line of the internal space.

In actual practice conventionally a relatively slight curve is used for the production of, for example, a straight bend, so that a split core can be employed having a tiltable front end, which can entirely be retracted from the internal space according to the curvature of the respective bend, said front end in that case having a slight tolerance with respect to the connecting socket which has a diameter greater than that of the internal space. At the other end of the bend, a single core is then used which core fills the internal space of the connecting socket or the spigot end only. The line separating the two cores cooperating with one another is then situated at the location of the transition between the straight internal space of the connecting socket or the spigot end and the curved internal space.

In certain circumstances it is desirable, however, to use a curved internal space in a bend the radius of curvature of which is considerably smaller than that of most of the common bends whilst the cross-section of the curved internal space should as yet be circular. In the latter case the centre of curvature of the curved internal space is situated in the intersection of two radii at the ends of the curved portion of the bend so that a split core with a tiltable end cannot be used, as said end could not possibly be retracted from the internal space because of its contact with the internal wall of the connecting socket in that case.

In actual practice there are known split cores which enable the production of a bend comprising a curved internal space having a slight radius of curvature. The cross-section of the internal spaces so obtained differs strongly, however, from a circular cross-section.

The present invention aims to provide moulded products which comprise a curved internal space having a substantially circular cross-section with a very slight radius of curvature a different configuration at the entrance of said internal space, e.g. a cylindrical entrance, either comprising a connecting socket or a spigot end and not impeding the retraction of the core from said internal space.

According to the invention this is attained by means of a split core which is characterized in that the shaping component following the path of travel of the other shaping component during passage of its path of travel, co-operates with a guide, part of which has been curved according to a path running parallel to successive points of a radius of curvature, where the greatest cross-section of the shaping component is perpendicular to a plane in which runs the radius of curvature.

It should be noted that it is known in practice to use split cores for undercut internal spaces in moulded products, which split cores comprise portions provided with wedge surfaces and adapted to move shaping components away from each other or towards each other in order to retract the split core from the internal space. In said known construction, however, an annular cross-section of the curved internal space is not comprised.

The latter features are essential as the shape of the curved internal face should be such that the widest parts of the shaping component should be able to so pass said curved internal space that they arrive unimpeded in that region of the internal space where their movement allows an easy retraction of the split core from said internal space.

For that purpose the shaping component defining the inner curve of the internal space, at least comprises a guiding stub which fits into a guiding groove comprising a curved part, said curved part preferably merging into a straight part. Said guiding groove is provided in at least one of the mould  halves. Preferably the stub is disposed upon a comb or cam which is secured to the shaping component destined for defining the inner curve of the curved space, said comb or cam co-operating with a guiding surface in the mould running parallel to the centre line of the moulded product and to the guiding groove in one of the mould halves.

A moulded product according to the invention, more particularly a pipe bend of injection-moulded material, is characterized in that the internal space of said moulded product has been shaped with at least one split core as described above.

In a moulded product of that kind, more particularly a bend of 90°, two split cores are used which then act in a reverse sense, the end faces of said split cores although adjoining one another, preferably not supporting each other.

The invention will now be illustrated with respect to some embodiments in the accompanying drawings, wherein:
Fig. 1 is a section in the flexional  plane of a pipe bend having a small radius of curvature, both ends of said pipe bend comprising a connecting socket;
Fig. 2 is a section similar to fig. 1, one end of one pipe bend, however, comprising a connecting spigot end;
Fig. 3 is a cross-section through a known pipe bend at the location of the internal space the interior of which strongly differs from a pipe bend having a circular cross-section;
Fig. 4 is a top view of a section in the flexional  plane in a pipe bend, accommodated in the cavity of a mould half, said pipe bend comprising two split cores;
Fig. 5 is a cross-section through a split core according to line V-V in fig. 4, and

Fig. 6 is a cross-section through a split core according to line VI-VI in fig. 4.

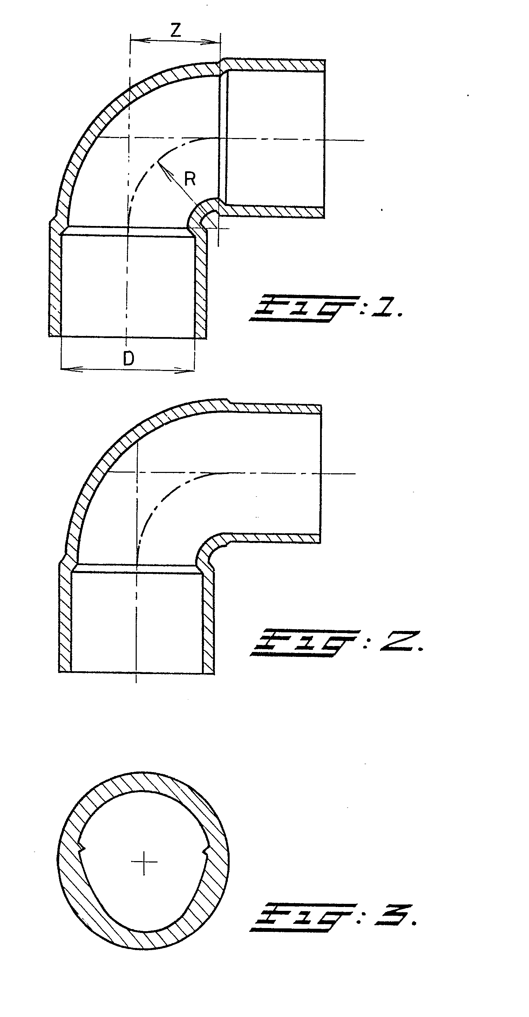

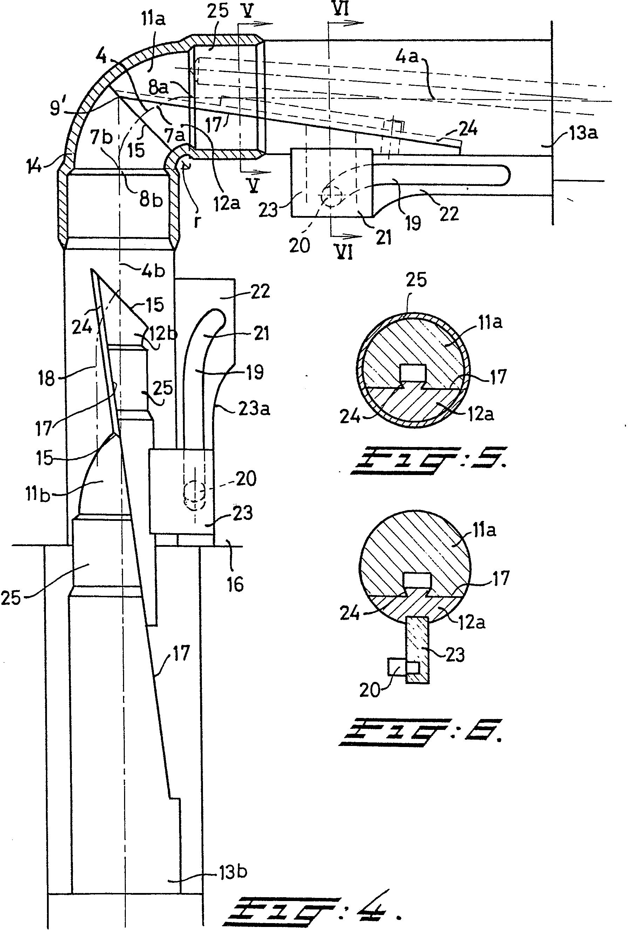

The cross-section of the curved inner space of a bend according to figs. 1 and 2 has to be circular, this contrary to a non-circular cross-section of the curved part of a bend of fig. 3. The latter non-circular cross-section of a known bend is obviously egg-shaped and possesses a distinct difference as regards the region having the greatest radius, and the region running more or less straight and merging into a region possessing the smallest radius.

Referring now to fig. 4 one of the split cores 13a comprises the outermost shaping component 11a defining part of the outer curve of the curved internal space, the innermost shaping component 12a defining part of the inner curve of the curved internal space.

According to the invention the split core 13a is therefore so constructed, that at least one of its shaping components is displaceable according to a curved path of the internal space parallel to the centre line of the moulded product, said shaping component being denoted by numeral 12a. In the figure two split cores have been used for shaping the internal space of the bend 14, i.e. the split core 13a and the split core 13b. The front faces of said split cores with their shaping components 11a, 12a, 11b 12b respectively, adjoin each other in the bisector of the angle enclosed by the bend 14, said two front surfaces adjoining one another, being denoted by a line referenced 15.

From the above it follows that the two split cores 13a and 13b can be used in a mould 16 for injection-moulded products 14, provided with one or more curved internal spaces, the shaping components 11a, 12a, 11b, 12b of the split cores 13a and 13b being displaceable according to mutually differing paths of travel out of the space of the mould 16 for injection-moulding. The shaping components 12a and 12b displaceable

-6-

parallel to the centre line of the internal space, (according to a curved path) follow the path of travel of the other shaping components 11a, 11b respectively, for which purpose said shaping components adjoin one another in a plane 17 being inclined with respect to their path of travel. The selection of the exact location and of the angle of inclination of the adjoining planes between the shaping components 11a 11b and 12a12b, is dependent upon a number of factors.

The ideal solution for the provision of a circular cross – section of the curved space would entail the separation between the shaping components 11a and 12a, 11b and 12b respectively, to be situated in a plane through the centre line 4a, 4b respectively, of the split cores 13a, 13b respectively, perpendicular to the flexional plane of the bend. The widest portion of the shaping component defining the outer curve of the curved internal space is in that case situated at the location of point 8a, 8b respectively, where the centre line 4 of the curved internal space adjoins the centre line 4a, 4b respectively, of the cylindrical region. A straight retraction of the shaping components 11a, 11b respectively, from the curved internal space of the moulded product could then take place without any problems occurring. In that case, however, said shaping components 11a, 11b respectively, need be entirely retracted from the moulded product in order to allow a displacement of the shaping components 12a 12b respectively, according to a path of travel parallel to the centre line of the moulded product, which would entail a complicated mould construction.

With a view to the above a construction is proposed in which the shaping components 11a, 11b, and 12a, 12b adjoin one another in a plane being inclined with respect to their path of travel.

The said inclination is as small as possible so that the widest portion of the shaping component 11a, 11b respectively, situated at the intersection 7a, 7b respectively, of the inclined plane and the centre line 4 of the curved internal space of the moulded product, is situated as close as possible near the centre line 4a, 4b respectively, of the cylindrical part of said moulded product. The latter measure entails an extremely slight flattening of the shaping component 11a, 11b respectively, at intersection 7a, 7b respectively, and suffices to allow a straight retraction of the shaping component 11a, 11b respectively, out of the moulded product.

On the other hand a slight inclination of plane 17 presents the advantage that the shaping components 12a, 12b respectively, extend into the mould beyond the moulded product, thus allowing a passing of said shaping component and providing the same with cooling channels in order to cool the inner curve of the moulded product.

Subsequently at least part of the shaping component 12a, 12b defining the inner curve of the curved internal space, is displaceable along a curved path adapted to the curve of the internal space, whilst the shaping components 11a, 11b, which define at least part of the outer curve of the internal space allow at least during their passage through part of their path of travel, the displacement of the shaping components 12a, 12b for the inner curve, according to a curved path parallel to the centre line of the moulded product.

The shaping components 12a, 12b being displaceable parallel to the centre line of the moulded product (according to a curved path of travel),possess a part with a generating line being curved according to the smallest radius of curvature of the internal space of the moulded product and co-operate with a guide 19 , part 21 of which being curved according to a path running parallel to successive points of a radius of curvature which is where the greatest cross-section of the shaping component is perpendicular to a plane in which the radius of curvature runs. The shaping components 12a, 12b determining the inner curve of the internal space comprise
a guiding stub 20 which fits into a guiding groove 19 provided with a curved part 21. Said curved part 21 of the
guiding groove 19 merges into a straight part. Each split
core 13a or 13b comprises a guiding groove 19 which is
disposed in at least one of the mould halves 16. The guiding
groove 19 is further accommodated in a cavity 22 provided
in a closing surface of a mould half 16. The shaping components
12a, 12b defining the inner curve of the space in the moulded
product 14, are provided with a cam or comb 23 extending laterally to said shaping components upon a place situated outside the moulded product 14; said cam or comb 23 also comprises the guiding stub 20 and fits into the closing surface
of cavity 22 accommodated in a mould half 16, at the time
when the guiding stub 20 is situated in the guiding groove 19.

The cam or comb 23 interacts with a curved surface 23a of
cavity 22 which surface runs parallel to the centre line of
the moulded product and parallel to the guiding groove 19.
A retraction of the shaping component 12a, 12b is a.o.
preferably also effected by having said comb or cam 23 run
along the surface 23a.

On introducing the split cores 13a, 13b respectively, the
shaping components 12a, 12b respectively, are guided by the
guiding stub 20 in the guiding groove 19. The two shaping
components 11a, 12a, 11b, 12b, respectively, are intercoupled
by means of one or more safety connections 24, for example,
a dovetail connection. As described hereinbefore a front
face 15 of a split core is designed as an adjoining surface,
in order to co-operate with another core or split core. The
split cores 13a and 13b additionally have a cylindrical part
25 for defining the shape of the internal space of the
connecting socket or spigot end of the moulded product 14,
e.g. a bend. Each pressure stroke of the mould causes the
split cores to be slid into or out of the shaping space of
the mould 16 in a conventional manner. Because of the presence of stub 20 with guiding groove 19 the shaping components 12a, 12b need not be separately driven, as the presence of the safety connection 24 will cause said shaping components to automatically follow the guiding groove 19 at the displacement of the split cores.

With a view to the above, a moulded product 14 comprising a curved internal space, more particularly a pipe bend of injection-moulded material, the internal space of which having been defined and effected by means of one or more split cores, presents the excellent advantage that the configuration of the curved internal space can be adapted entirely to the shape as chosen. More particularly, said moulded products present the advantage that two opposite sides of the internal space possess a separating mark resulting from the closing surface 17 of the split core which mark extends into the course of the curve between two spaced cross-sections, the distance between two marks in one cross-section exceeding that in the other cross-section.

A cross-section situated approximately in the centre of the internal space of the moulded product, additionally possesses a mark of the closing faces 15 between two split ·cores 13a and 13b, at either side of which mirror-symmetrical marks of separating planes 17 of shaping components of split cores are situated. The entrance of the internal space additionally comprises a connecting socket, the internal wall of which comprises a mark of the separating plane 17 of two shaping components of a split core 13a, 13b respectively.

The bend according to the invention, more particularly a pipe bend, may also be embodied in a bend which is, more particularly, characterized by a curved internal space having a substantially circular cross-section by means of a Z-length (see fig. 1) wherein:

$0,5\ D < Z < 1,2\ D$ and by a radius of curvature R, wherein:

$Z < R < 2\ Z$ and $0,5\ D < R < 1,5\ D$.

Claims:

1.       A split core 13a, 13b comprising shaping components 11a, 12a, 11b, 12b which are displaceable with respect to one another, to be used in connection with an injection mould 16 destined to form moulded products 14 having one or more curved internal spaces, more particularly a pipe bend, at least one of the shaping components being constructed slideably along the other one and displaceable according to a path of travel adapted to the curved internal space of the product to be moulded, characterized in that the shaping component following the path of travel of the other shaping component during passage of its path of travel, co-operates with a guide (19) part (21) of which has been curved according to a path running parallel to successive points of a radius of curvature where the greatest cross-section of the shaping component is perpendicular to a plane in which the radius of curvature runs.

2.       A split core according to claim 1, characterized in that the shaping component (12a, 12b) defining the inner curve of the internal space, at least comprises a guiding stub (20) which fits into a guiding groove (19) comprising a curved part (21).

3,       A split core according to claim 2, characterized in that the curved part (21) of the guiding groove (19) merges into a straight part.

4.       A split core with a mould (16) for injection-moulded products according to any one or more of claims 1-3, characterized in that the guiding groove (19) is disposed at least in one of the mould halves (16).

5.       A split core with a mould for injection-moulded products according to claim 4, characterized in that the guiding groove(19) is provided in a closing surface of a cavity (22) disposed in a mould half (16).

6. A split core according to any one or more of claims 1-5, characterized in that the shaping component (12a, 12b) defining the inner curve of the internal space of the moulded product (14) is provided with a cam or comb (23) extending laterally to said shaping component at a place outside the moulded product, said cam or comb (23) being provided with a guiding stub (20) fitting into the closing surface of a cavity (22) in a mould half (16) and running parallel to the centre line of the moulded product and parallel to the guiding groove (19).

7. A moulded product comprising a curved internal space, more particularly a pipe bend of injection-moulded material, the internal space of which has been defined and produced by means of one or more split cores, characterized in that the internal space has been shaped by at least one split core (13a, 13b) as claimed in claims 1-6

8. A moulded product as claimed in claim 7, characterized by a curved internal space substantially possessing a circular cross-section through a Z-length, wherein: $0,5 \; D < Z < 1,2 \; D$ and by a radius of curvature R, wherein: $Z \leqslant R \leqslant 2 \; Z$ and $0,5 \; D < R < 1,5 \; D$.

Z

R

*Fig:1.*

D

*Fig:2.*

+

*Fig:3.*

FIG:5.

FIG:6.

FIG:4.

## EUROPEAN SEARCH REPORT

European Patent Office

| DOCUMENTS CONSIDERED TO BE RELEVANT | | | CLASSIFICATION OF THE APPLICATION (Int. Cl. ³) |
|---|---|---|---|
| Category | Citation of document with indication, where appropriate, of relevant passages | Relevant to claim | |
| A | FR - A - 2 167 737 (R. MESSER-SCHMITT) | | B 22 D 17/24 B 29 F 1/00 |
| A | DE - C - 840 577 (O. ERTINGER) | | |
| A | DE - B - 1 114 027 (G. SPELSBERG) | | |
| A | AU - A - 426 509 (J. BRONOTTE) | | |

**TECHNICAL FIELDS SEARCHED (Int.Cl. ³)**

B 22 D
B 22 C
B 29 F

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| | The present search report has been drawn up for all claims | | |
|---|---|---|---|
| Place of search | Date of completion of the search | Examiner | |
| The Hague | 06-04-1982 | MAILLIARD | |

EPO Form 1503.1  06.78